# EUROPEAN PATENT APPLICATION

(11) **EP 2 308 676 A1**
(43) Date of publication of application: **13.04.2011**
(21) Application number: 10182085.0
(22) Date of filing: 29.09.2010
(51) Int. Cl.: B32B 25/20, B32B 27/08, B32B 27/20, C09J 183/04, H01B 17/56, H01B 17/60

(54) **Thermal conductive silicone rubber composite sheet**

(30) Priority: 08.10.2009 JP 2009234273
(71) Applicant: Shin-Etsu Chemical Company, Ltd., Tokyo 100-0004 (JP)
(72) Inventor: Endo, Akihiro, Gunma 379-0224 (JP); Maruyama, Takahiro, Gunma 379-0127 (JP)
(74) Representative: Solf, Alexander

(57) **Abstract**

This invention discloses a thermal conductive silicone rubber composite sheet, comprising of an intermediate layer (A), which is an electric insulating heat resistant film, and cured material layers as an outer layers (B) prepared on both surfaces of said intermediate layer (A), **characterized in that** said cured material layers (B) are prepared by curing a silicone composition in a thin film state which are formed by coating said silicone composition comprising the following components (a)-(f) on both surfaces of said intermediate layer (A) ;

(a) organopolyciloxane having two or more alkenyl groups bonding to a silicon atom within a molecule: 100 mass parts
(b) thermal conductive filler: 100-4,000 mass parts
(c) organohydrogenpolysiloxane having two or more hydrogen atoms bonding to a silicon atom within a molecule: the amount wherein the mole ratio of [the hydrogen atom bonding to a silicone atom of the present component/an alkenyl group in the component (a)] is 0.5-5.0
(d) platinum group metallic catalyst: effective amount
(e) reaction control agent: effective amount, and
(f) silicone resin: 50-500 mass parts

wherein, the outer layers provided on both surfaces of the intermediate layer (A) may be identical or different.

## Description

### TECHNICAL FIELD

The present invention relates to a thermal conductive silicone rubber composite sheet suitable for materials used between heat generating electronic parts and heat releasing parts such as a radiation fin, in particular a thermal conductive silicone rubber composite sheet that has strength, flexibility and adhesive properties as well as good electric insulating properties and thermal conductivity.

### BACKGROUND OF THE INVENTION

Generally, thermal conductive materials having electric insulating properties are used as a heat releasing material used for heat generating electronic, electric parts such as power transistors, MOS transistors, FETs, thyristors, rectifiers and transformers. Thermal conductive materials having electric insulating properties include the ones wherein synthetic rubber such as a silicone rubber is combined with metallic oxide powder such as beryllium oxide, aluminum oxide, aluminum hydroxide, magnesium oxide and zinc oxide (Patent document 1), and ones wherein boron nitride is combined with silicone rubber and reinforced with a network-like insulating material (Patent document 2).

It is thought that making the material as thin as possible is one method of improving the thermal conductivity of the above thermal conductive material having electric insulating properties. However, being too thin damages strength, durability or electric insulating properties of the heat releasing material parts.

In order to solve this problem, a thermal conductive material having multilayer structure is proposed, wherein as the intermediate layer, film full of heat resistance, electric insulating properties and mechanical strength such as aromatic polyimide, polyamide, polyamideimide, polyethylene naphthalate is used; and, as the outer layers, silicone rubber layers having excellent thermal conductivity and electric properties containing berillium oxide, aluminum oxide and aluminum hydroxide etc. is used. Specifically, a thermal conductive electric insulating material composed of a complex sheet consisting of at least three layers are proposed wherein a polyimide(amide) film containing a desired amount of aluminum oxide is provided as the intermediate layer, a silicone rubber layer containing an aluminum oxide etc. is provided in both surfaces of the above intermediate layer as a pair of outer layers (Patent document 3).

However, these thermal conductive electric insulating materials having multilayer structure are unstable in adhesive properties between a silicone rubber layer of the outer layer part and film such as aromatic polyimide of the intermediate layer. Therefore, since their interlayer release tends to occur over time, they have the disadvantage where endurance is poor.

In order to solve this problem, a thermal conductive silicone rubber composite sheet using a cured composition for the above outer layer is proposed, wherein the composition comprises silicide adhesive imparting agent having at least one kind of functional groups selected from groups such as an epoxy group, an alkoxy group, a vinyl group and a group represented by (≡SiH) (Patent document 4).

However, this thermal conductive silicone rubber composite sheet has a disadvantage where the thermal conducting quality lowers as a whole composite sheet since this thermal conductive silicone rubber composite sheet is extremely poor in thermal conductivity of the film consisting of aromatic polyimide etc. of the intermediate layer, compared to the one of the thermal conductive silicone rubber layer of the outer layer.

Similarly, other well-known thermal conductive silicone rubber composite sheets (Patent documents 5-7) cannot satisfy both the good interlayer adhesive properties and the excellent thermal conductivity simultaneously. In addition, these well-known thermal conductive silicone rubber composite sheets have no adhesive properties on their surfaces. Therefore, it was difficult to attach the sheets easily to heat generating electric parts or heat releasing materials.
Even if adhesive properties are imparted on their surfaces by coating adhesive agents, thermal conductivity deteriorates, which was a problem.

### PRIOR ART DOCUMENT

### PATENT DOCUMENT

[Patent document 1] Japanese Unexamined Patent Publication Tokkai-sho 47-32400
[Patent document 2] Japanese Unexamined Utility Model Publication Jitsukai-sho 54-184074
[Patent document 3] Japanese Unexamined Patent Publication Tokkohei 2-24383
[Patent document 4] Japanese Unexamined Patent Publication Tokkai 2004-122664
[Patent document 5] Japanese Unexamined Patent Publication Tokkai 2001-018330
[Patent document 6] Japanese Unexamined Patent Publication Tokkaihei 11-157011
[Patent document 7] Japanese Unexamined Patent Publication Tokkaihei 10-237228

### SUMMARY OF THE INVENTION

### PROBLEMS TO BE SOLVED BY THE INVENTION

Therefore, the object of the present invention is to provide a thermal conductive silicone rubber composite sheet full of strength and flexibility with excellent adhesive properties between layers as well as having excellent electric insulating properties and thermal conductivity.

### MEANS TO SOLVE THE PROBLEM

Namely, the present invention is a thermal conductive silicone rubber composite sheet and the method to manufacture the same. This thermal conductive silicone rubber composite sheet is characterized by laminating cured material layers as outer layers (B) on both surfaces of an intermediate layer (A) of an electric insulating heat resistant film layer respectively, wherein the cured material layers (B) are composed by forming a silicone composition comprising the following components (a)-(f) in the state of thin film and curing;
(a) organopolysiloxane having two or more alkenyl groups bonded with silicon atoms within a molecule: 100 mass parts
(b) thermal conductive filler: 100-4,000 mass parts
(c) organohydrogenpolysiloxane having two or more hydrogen atoms bonded with silicon atoms within a molecule: the amount wherein the mole ratio of [the hydrogen atoms bonding to silicone atoms of the present component/the alkenyl groups in the component (a)] is 0.5-5.0
(d) platinum group metallic catalyst: effective amount
(e) reaction control agent: effective amount, and
(f) silicone resin: 50--500 mass parts In this regard, the outer layers provided on both surfaces of the intermediate layer (A) may be identical or different.

In the present invention it is preferable that the silicone resin of the above component (f) contains R¹₃SiO_{1/2} unit (R¹ indicates an unsubstituted or substituted monovalent hydrocarbon group that does not contain an aliphatic unsaturated bond) and SiO_{4/2} unit and a ratio of R¹₃SiO_{1/2} unit/SiO_{4/2} unit is 0.5-1.5 in mole base. In addition, it is preferable that the silicone composition further comprises, as the component (g), 0.01-50 mass parts of at least one kind selected from groups consisting of (g-1) alkoxysilane compound represented by the following general formula (1) and (g-2) dimethylpolysiloxane wherein one end of the molecular chain is terminated with a trialkoxysilyl group.

(g-1) alkoxysilane compound expressed by the general formula (1):

R²ₐR³_{b}Si(OR⁴)_{4-a-b} (1)

R² in the above formula is independently an alkyl group having 6-15 carbon atoms, R³ is independently an unsubstituted or substituted monovalent hydrocarbon group having 1-8 carbon atoms, R⁴ is independently an alkyl group having 1-6 carbon atoms, a is an integer of 1-3, b is an integer of 0-2 and a+b is an integer of 1-3.
(g-2) dimethylpolysiloxane expressed by the general formula (2) : 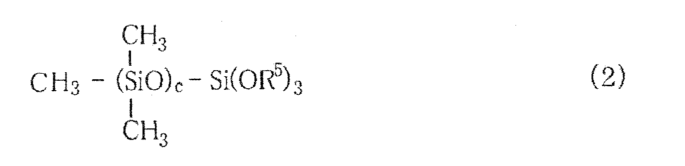 R⁵ in the above formula is independently an alkyl group having 1-6 carbon atoms, c is an integer of 5-100.

In the present invention, organopolysiloxane whose kinematic viscosity is 10-100,000mm²/s at 23°C can be contained as a component (h), which is represented by the following general formula (3).
General formula (3):

R⁶-(SiR⁶₂O)_{d}SiR⁶₂-R⁶ (3)

R⁶ in the above formula is independently a monovalent hydrocarbon group having 1-18 carbon atoms and does not contain an aliphatic unsaturated bond, d is an integer of 5-2,000.

It is preferable that the thermal conductive silicone rubber composite sheet of the present invention is 50-1,000µm thick and that the intermediate layer (A) comprises a thermal conductive film whose thermal conductivity is 0.3W/mK or more, and composed of a synthetic resin and thermal conductive powder which is dispersed in the synthetic resin.
It is preferable that the above synthetic resin is aromatic polyimide, polyamide, polyamideimide, polyester, fluorinated polymer or a combination of these two or more kinds. Furthermore, it is preferable that the thermal conductive powder dispersed in the synthetic resin of the above intermediate layer (A) is at least one kind selected from zinc oxide powder, aluminum oxide powder, magnesium oxide powder, aluminum hydroxide powder, boron nitride powder, aluminum nitride powder, silicon carbide powder or diamond powder.

### EFFECT OF THE INVENTION

The thermal conductive silicone rubber composite sheet of the present invention, which is good in thermal conductivity, has not only adhesive silicone rubber layers as outer layers but also has sufficient strength and flexibility reinforced by the intermediate layer.
Therefore, it is suitable as electric insulating thermal conductive material which is used between heat generating electronic · electric parts and heat releasing parts. In addition, the silicone rubber layer itself has adhesive properties, therefore, the silicone rubber layer is able to attach closely to the synthetic resin film layer.
As a result, the thermal conductive silicone rubber composite sheet of the present invention has excellent endurance, which is a special effect of the present invention.

### BRIEF DESCRIPTION OF THE DRAWING

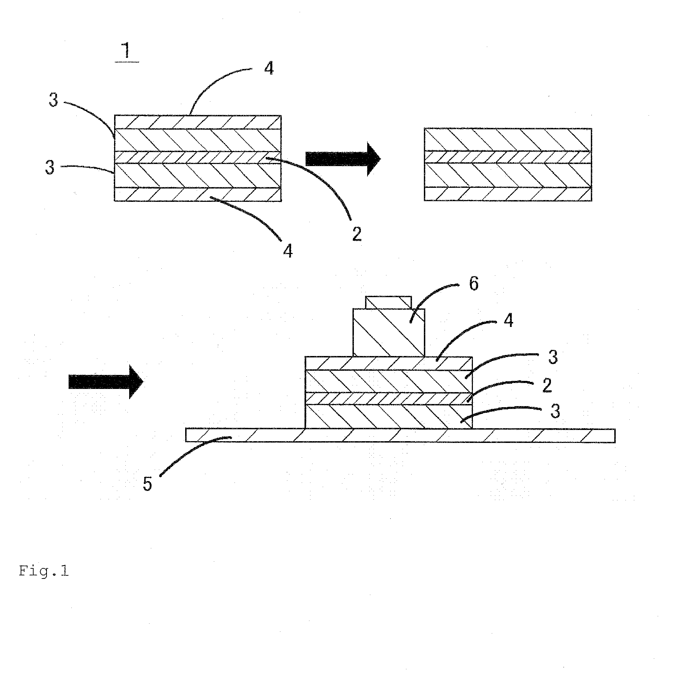

Figure 1 is a drawing to explain the procedure for evaluation of oil bleed of the test piece. In the figure, numeral of 1 is a sample piece, 2 is a. intermediate layer, 3 is an adhesive layer(a silicone rubber layer), 4 is a separator, 5 is a woodfree paper and 6 is an weight.

### PREFERRED ENTBODIMENT OF THE INVENTION

Hereafter, this invention will be further described precisely.
The thermal conductivity of the synthetic resin film layer in the present specification is measured at 25°C based on the laser flash method.

### [(A) Intermediate layer]

The intermediate layer in the composite sheet of the present invention is not limited in particular as long as it is a synthetic resin film layer having high flexibility and mechanical strength as well as excellent heat resistance and electric insulating properties. It can be suitably chosen from well-known synthetic resin films.
The above synthetic resin film layer is usually 5-40µm thick, preferably 10-30µm thick. If it is too thick, the thermal conductivity of the composite sheet of the present invention will be damaged. If it is too thin, the strength to work as the intermediate layer is insufficient, and sometimes, voltage endurance characteristics deteriorates and electric insulation performance may be insufficient.
Further, the synthetic resin film layer is required to be the film layer with no pores which drop a voltage endurance characteristics.

It is particularly preferable in the present invention that a thermal conductivity-imparted thermal conductive synthetic resin film is used as the above intermediate layer. It is preferable that the thermal conductivity of this thermal conductive synthetic resin film layer is 0.3W/m· K or more, 0.4W/m· K or more is particularly preferable.

The thermal conductive synthetic resin film layer used as the above intermediate layer is typically a layer consisting of films containing synthetic resin and thermal conductive powder dispersed in the synthetic resin. As for each synthetic resin and thermal conductive powder, one kind thereof may be used alone or two or more kinds thereof may be used in combination.

Examples of the above synthetic resin are aromatic polyimide; polyamide; polyamideimide; polyester such as polyethylene naphthalate; fluorinated polymers such as polytetrafluoroethylene (PTFE), tetrafluoroethylene · perfluoroalkyl vinylether copolymer. When the above fluorinated polymers are used as a synthetic resin, it is preferable from a viewpoint of improving adhesive properties that a chemical etching treatment is performed with a metal Na/naphthalene processing solvent against the surfaces of film used.

Examples of the above thermal conductive powder dispersed in the synthetic resin are inorganic powder such as zinc oxide powder, aluminum oxide powder, aluminum hydroxide powder, boron nitride powder, aluminum nitride powder, silicon carbide powder and diamond powder. However, the present invention is not limited to these, but can be selected from the ones having thermal conductivity and insulation properties.

In the present invention, a thermal conductive synthetic resin film may be used wherein thermal conductivity is improved by not blending the thermal conductive powder but increasing the crystal properties of the synthetic resin.

It is preferable that the synthetic resin film used in the present invention is a heat resistant film whose melting point is 200°C or more, especially 250°C or more, which does not lower the mechanical strength when thermal deformation occurs. A specific example of heat resistant synthetic resin film whose melting point is 250°C or more is Kapton (registered trade mark) MT(Conunercial name, manufactured by DU PONT-TORAY CO. LTD.,).

### [(B) Outer layer]

The outer layer of the thermal conductive composite of the present invention means the first cured material layer and the second cured material layer, which are each formed of compositions containing the above components (a)-(f) as an essential component. The compositions of the first cured material layer and the second cured material layer may be identical or different. Hereafter, the compositions of the outer layer will be described.

### [(a) Organopolysiloxan having an alkenyl group]

The component (a) used in the present invention is an organopolysiloxane having two or more alkenyl groups bonding to silicon atoms within a molecule, and is one of main agents (base polymers) in an addition reaction curing type composition. This oranopolysiloxane is not limited in the molecular structure as long as it is liquid. Examples are straight chain, branched chain and straight chain having a partial branch. It is preferable in the present invention that the structure of the oranopolysiloxane is straight chain.

The above alkenyl group means a concept including a cycloalkenyl group as well as a straight-chain alkenyl group. Specific examples are a vinyl group, an allyl group, a propenyl group, an isopropenyl group, a butenyl group, a hexenyl group and a cyclohexenyl group, which have 2-8 carbon atoms. Above all, lower alkenyl groups having 2-3 carbon atoms such as a vinyl group and an allyl group are preferable, in particular a vinyl group is preferable. This alkenyl group may bond to any of silicon atoms, namely silicon atoms at the end of the molecular chain or silicon atoms in the middle of the molecular chain. From a viewpoint of enhancing the flexibility of a cured material obtained, an alkenyl group bonded only with silicon atoms at the end of the molecular chain is preferable.

Groups in the component (a) other than an alkenyl group, which bond to silicon atoms are unsubstituted or substituted monovalent hydrocarbon groups. Examples are alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group and a dodecyl group; cycloalkyl groups such as a cyclopentyl group, a cyclohexyl group and a cycloheptyl group; aryl groups such as a phenyl group, a tolyl group, a xylyl group, a naphthyl group and a biphenilyl group; aralkyl groups such as a benzyl group, a phenylethyl group, a phenylpropyl group and a methylbenzyl group; and groups wherein a part of or all of hydrogen atoms bonding to carbon atoms of these groups are substituted by halogen atoms such as fluorine, chlorine and bromine or cyano groups. Examples are groups having 1-10 carbon atoms, in particular having 1-6 carbon atoms, such as a chloromethyl group, a 2-bromoethyl group, a 3-chloropropyl group, a 3,3,3-trifluoropropyl group, a chlorophenyl group, a fluorophenyl group, a cyanoethyl group, a 3,3,4,4,5,5,6,6,6-nonafluorohexyl group.

In the present invention, among these, unsubstituted or substituted alkyl groups having 1-3 carbon atoms such as a methyl group, an ethyl group, a propyl group, a chloromethyl group, a bromoethyl group, a 3,3,3-trifluoropropyl group and a cyanoethyl group; unsubstituted or substituted phenyl groups such as a phenyl group, a chlorophenyl group and a fluorophenyl group are preferable in particular. Groups bonding to silicon atoms other than an alkenyl group may be all identical or different. It is preferable from standpoints of ease of obtaining, chemical stability and environmental load, that all of the groups are methyl groups as long as special properties such as solvent resistance properties are not required.

It is preferable that the kinematic viscosity of the above organopolysiloxane at 25°C is usually 10-100,000mm²/s, in particular 500-50,000mm²/s. If the above viscosity is under 10mm²/s, the storage stability of the obtained composition might decline. If it is beyond 100,000mm²/s, the extensibility of the obtained composition might decline.

Suitably specific examples of these organopolysiloxanes are a polydimethylsiloxane wherein both ends of molecular chain are terminated with a dimethylvinylsiloxy group, a polydimethylsiloxane wherein both ends of molecular chain are terminated with a methyldivinylsiloxy group and a dimethylsiloxane·methylphenylsiloxane copolymer wherein both ends of molecular chain are terminated with a dimethylvinylsiloxy group.

In the present invention, one kind of organopolysiloxane may be used alone or two or more organopolysiloxanes having different viscosities may be used in combination as the organopolysiloxane of the component (a).

### [(b) Thermal conductive filler]

Examples of the thermal conductive filler of the component (b) used in the present invention are metal powder, metal oxide powder and ceramic powder. Specific examples are aluminum powder, copper powder, silver powder, nickel powder, gold powder, aluminum oxide powder, aluminum hydroxide powder, silicon oxide powder, zinc oxide powder, magnesium oxide powder, iron oxide powder, titanium oxide powder, zirconium oxide powder, aluminum nitride powder, boron nitride powder, silicon nitride powder, diamond powder, carbon powder, fullerene powder and carbon graphite powder.
However, the present invention is not limited in these thermal conductive fillers. At least one kind of filler can be suitably selected from well-known fillers, which are commonly used as a thermal conductive filler.

It is preferable that the average particle diameter of these thermal conductive fillers is 0.1-100 µm, in particular 0.5-50 µm is more preferable. In the present invention, two or more kinds of particles having different average particle diameters can be used together.
The above average particle diameter means volume average particle diameter, which is a value measured with Microtrac Particle Size Distribution & Characterization Analyzers MT3300EX manufactured by NIKKISO CO., LTD.

The blending amount of the thermal conductive fillers in the present invention is 100-4,000 mass parts, preferably 200-2, 000 mass parts relative to 100 mass parts of the component (a) from viewpoints of fluidity, forming properties and obtained thermal conductivity etc..

### [(c) Organohydrogenpolysiloxane]

The composition of the component (c) used in the present invention is an organohydrogenpolysiloxane having two or more, preferably 2-100 hydrogen atoms bonding to silicon atoms (namely, SiH group) within a molecule, which works as a cross-linking agent of the component (a). Namely, under the function of platinum group metal catalyst of the component (d) mentioned below, the hydrogen atoms bonding to the silicon atoms of the component (c) add to the alkenyl groups of the component (a) to carry out the hydrosilylation reaction, and a cross-linked cured material having a cross-linking three dimensional network structure is produced.

Examples of organic groups, which may bond to the silicon atoms of the component (c), are unsubstituted or substituted monovalent hydrocarbon groups having no aliphatic unsaturated bond. Specific examples are unsubstituted or substituted hydrocarbon groups that are the same kind as the one cited before as groups bonding to the silicon atoms other than an aliphatic unsaturated group described in the component (a). Among them, a methyl group is preferable from standpoints of easy synthesis and economical efficiency.

The structure of the organohydrogenpolysiloxane of the component (c) in the present invention is not limited in particular, which may be straight-chain, branched-chain or cyclic-chain, but straight chain is preferable.
Such organohydrogenpolysiloxane having straight-chain is represented by the following general formula (4). 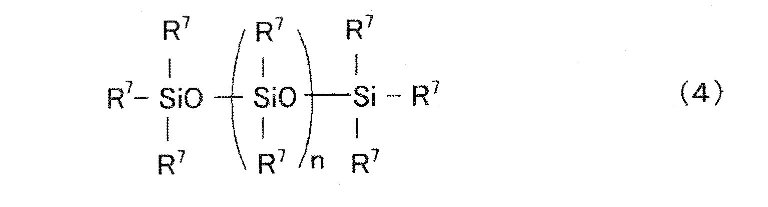 R⁷ in the above formula is each an unsubstituted or substituted monovalent hydrocarbon group other than an aliphatic unsaturated group or a hydrogen atom independently. In particular at least two of them are requested to be hydrogen atoms, n is an integer of 1 or more.

An unsubstituted or substituted monovalent hydrocarbon group other than an aliphatic unsaturated group represented by R⁷ in the above general formula (4) is the same kind of group as the monovalent hydrocarbon group other than alkenyl group, described in the section of the component (a), which bonds to silicon atoms.
It is preferable that n is an integer of 2-100, but 5-50 is more preferable.

Suitably specific examples of the organohydrogenpolysiloxane of the component (c) are a methylhydrogenpolysiloxane wherein both ends of molecular chain are terminated with a trimethylsiloxy group, a dimethylsiloxane· methylhydrogensiloxane copolymer wherein both ends of molecular chain are terminated with a trimethylsiloxy group, a dimethylsiloxane · methylhydrogensiloxane· methylphenylsiloxane copolymer wherein both ends of molecular chain are terminated with a trimethylsiloxy group, a dimethylpolysiloxane wherein both ends of molecular chain are terminated with a dimethylhydrogensiloxy group, a dimethylsiloxane· methylhydrogensiloxane copolymer wherein both ends of molecular chain are terminated with a dimethylhydrogensiloxy group, a dimethylsiloxane · methylphenylsiloxane copolymer wherein both ends of molecular chain are terminated with a dimethylhydrogensiloxy group and a methylphenylpolysiloxane wherein both ends of molecular chain are terminated with a dimethylhydrogensiloxy group. The organohydrogenpolysiloxane of the component (c) may be used alone, or two or more kinds may be used in combination.

As for the amount of the component (c) to be added in the present invention, a SiH group in the component (c) should be 0.5-5.0 mol, preferably 0.8-4.0 mol relative to 1 mol of the alkenyl group of the component (a). If the amount of the SiH group of the component (c) is under 0.5 mol relative to 1 mol of the alkenyl, group of the component (a), some problems occur wherein a thermal conductive composition does not cure, the strength of the cured material is insufficient and it is impossible to treat it as a molding or a composite. On the contrary, if the amount used is beyond 5.0 mol, a problem occurs wherein the thermal conductive silicone rubber composite sheet of the present invention cannot adhere to the adherend by itself since the adhesive properties of the cured material surfaces are insufficient.

### [(d) Platinum group metal catalyst]

The platinum group metal catalyst of the component (d) in the present invention is the component which is used in order to accelerate the addition reaction between the alkenyl groups of the component (a) and the hydrogen atoms bonded to the silicon atoms of the component (c) to convert the composition of the present invention to the cross-linked cured material having a three dimensional network structure.

The above component (d) can be suitably selected from well-known catalysts used for the usual hydrosilylation reaction. Specific examples are platinum group metal simple substances such as platinum (including platinum black), rhodium and palladium; platinum chlorides such as H₂PtCl₄·nH₂O, H₂PtCl₆· nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, Na₂HPtCl₄·nH₂O (wherein n in the formula is an integer 0-6, preferably 0 or 6.); chloroplatinic acid and chloroplatinic acid chloride; alcohol-modified chloroplatinic acid chloride; complex of chloroplatinic acid and olefin; catalyst wherein platinum group metals such as platinum black and palladium are supported by carriers such as alumina, silica and carbon; rhodium-olefin complex; chlorotris (triphenylphosphine) rhodium (Wilkinson's catalyst); platinum chloride; complex of chloroplatinic acid or chloroplatinic acid chloride and vinyl group-containing siloxane. These platinum group metal catalysts may be used alone or two or more kinds of them may be used in combination.

The blending amount of platinum group metal catalyst of the above component (d) is not limited in particular as long as it is the effective amount necessary to cure compositions of the present invention. Commonly it is 0.1-1,000 ppm, preferably 0.5-500 ppm by mass of platinum group metal relative to the component (a).

### [(e) Reaction control agent]

The reaction control agent of the component (e) used in the present invention is for the sake of controlling the speed of a hydrosilylation reaction, which is an addition reaction of the components (a) and (c), proceeding in the presence of the component (d). Such reaction control agent of the component (e) can be suitably selected from well-known addition reaction control agents used for a common addition reaction curing type silicone composition. Specific examples are acetylene compounds such as 1-ethynyl-1-cyclohexanol and 3-butyn-1-ole, nitrogen compounds, organic phosphorous compounds, sulfur compounds, oxime compounds and organic chloro compounds etc. These addition reaction control agents may be used alone or two or more kinds may be used in combination.

The blending amount of the above component (e) cannot be necessarily determined since it depends on the amount of the component (d) used. As long as the hydrosilylation reaction speed can be controlled to a desired reaction speed, it is sufficient as the effective amount. Generally, 10-50,000 ppm is preferable relative to the mass of the component (a). If the blending amount of the component (e) is too small, the storage stability of the composition of the present invention is insufficiant, which makes it impossible to secure sufficiently available time. If it is too large, curing properties of the composition of the present invention drop.

### [(f) Silicone resin]

The silicone resin of the component (f) used for the present invention has a function to impart adhesive properties to the surfaces of the cured material, which is obtained by curing the composition of the present invention. An example of such component (f) is a silicone resin of a copolymer of R¹₃SiO_{1/2} unit (M unit) and SiO_{4/2} unit (Q unit) wherein the mole ratio M/Q of the M unit and Q unit is 0.5-1.5, preferably 0.6-1.4, more preferably 0.7-1.3. As long as the above M/Q is 0.5-1.5, the desired adhesive properties are obtained.

R¹ in the general formula representing the above M unit is an unsubstituted or substituted monovalent hydrocarbon group containing no aliphatic unsaturated bond. Examples of such R¹s are alkyl groups such as methyl group, ethyl group, propyl group, isopropyl group, butyl group, isobutyl group, tert-butyl group, pentyl group, neopentyl group, hexyl group, heptyl group, octyl group, nonyl group, decyl group and dodecyl group; cycloalkyl groups such as cyclopentyl group, cyclohexyl group and cycloheptyl group; aryl groups such as phenyl group, tolyl group, xylyl group, naphthyl group and biphenylyl group; aralkyl groups such as benzyl group, phenylethyl group, phenylpropyl group and methylbenzyl group; groups wherein a part or all of the hydrogen atoms bonded to carbon atoms of these groups are replaced with halogen atoms such as fluorine, chlorine and bromine, and cyano groups, for example, a chloromethyl group, a 2-bromoethyl group, a 3-chloropropyl group, a 3,3,3-trifluoropropyl group, a chlorophenyl group, a fluorophenyl group, a cyanoethyl group and a 3,3,4,4,5,5,6,6,6-nonafluorohexyl group which have 1-10 carbon atoms, preferably 1-6 carbon atoms.

In the present invention, unsubstituted or substituted alkyl groups having 1-3 carbon atoms such as a methyl group, an ethyl group, a propyl group, a chloromethyl group, a bromoethyl group, a 3,3,3-trifluoropropyl group and a cyanoethyl group, and unsubstituted or substituted phenyl groups such as a phenyl group, a chlorophenyl group and a fluorophenyl group are preferable among them.
All R¹s may be identical or different. It is preferable that all R¹ are methyl groups from standpoints of cost, ease of obtaining, chemical stability and environmental load, as long as special properties such as solvent resistance properties are not required.

The amount of the component (f) added in the present invention is 50-500 mass parts, preferably 60-350 mass parts, and more preferably 70-250 mass parts relative to 100 mass parts of the component (a). If the amount of the component (f) added is less than 50 mass parts or beyond 500 mass parts, desired adhesive properties cannot be obtained.

The component (f), which is solid or viscous liquid itself, can be used as a solution dissolved in the solvent. In that case the amount added to the composition is defined as the amount except for the solvent.

### [Other components]

In the present invention, components other than the above components (a)-(f) can be added to the silicone composition used for the outer layer, if required, within the range of not damaging the object of the present invention. Hereafter, such optional components will be described.

### (g) Surface treating agent:

The surface treating agent (wetter) can be blended with the composition of the present invention when the present composition is prepared, for the purpose of making a thermal conductive filler of the component (b) hydrophobic for improving the wetting properties using the oranopolysiloxane of the component (a) and dispersing said thermal conductive filler uniformly in the matrix consisting of the component (a) It is preferable to use the following (g-1) and (g-2) as the component (g) in particular.

(g-1): an alkoxysilane compound represented by the following general formula (1)

R²ₐR³_{b}Si(OR⁴)_{4-a-b} (1)

R² in the above formula is, independently, an alkyl group having 6-15 carbon atoms, R³ is, independently, an unsubstituted or substituted monovalent hydrocarbon group having 1-8 carbon atoms, R⁴ is, independently, an alkyl group having 1-6 carbon atoms, a is an integer of 1-3, b is an integer of 0-2 and a+b is an integer of 1-3.

Examples of an alkyl group represented by R² in the above general formula (1) are a hexyl group, an octyl group, a nonyl group, a decyl group, a dodecyl group and tetradecyl group. As long as the number of carbon atoms of the alkyl group represented by R² is within the range of 6-15, the wetting properties of the thermal conductive filler of the component (b) is improved sufficiently and working properties is also improved, therefore, low temperature quality of the composition of the present invention becomes excellent.

Examples of an unsubstituted or substituted monovalent hydrocarbon group represented by the above R³ are alkyl groups such as methyl group, ethyl group, propyl group, hexyl group and octyl group; cycloalkyl groups such as cyclopentyl group and cyclohexyl group; alkenyl groups such as vinyl group and allyl group; aryl groups such as phenyl group and tolyl group; aralkyl groups such as 2-phenylethyl group and 2-methyl-2-phenylethyl group; halogenated hydrocarbon groups such as 3,3,3-trifluoropropyl group, 2-(nonafluorobutyl)ethyl group, 2-(heptadecafluorooctyl)ethyl group and p-chlorophenyl group. In the present invention, methyl group and ethyl group are, in particular, preferable among these.

Examples of an alkyl group represented by the above R⁴ are alkyl groups such as methyl group, ethyl group, propyl group, butyl group, pentyl group and hexyl group. In the present invention, in particular, methyl group and ethyl group are preferable among these.

Suitably specific examples are as follows:
C₆H₁₃Si(OCH₃)₃
C₁₀H₂₁Si(OCH₃)₃
C₁₂H₂₅Si(OCH₃)₃
Cₗ₂H₂₅Si(OC₂H₅)₃
C₁₀H₂₁Si(CH₃)(OCH₃)₂
C₁₀H₂₁Si(C₆H₅)(OCH₃)₂
C₁₀H₂₁Si(CH₃)(OC₂H₅)₂
C₁₀H₂₁Si(CH=CH₂)(OCH₃)₂
C₁₀H₂₁Si(CH₂CH₂CF₃)(OCH₃)₂

The above component (g-1) may be used alone or two or more kinds of them may be used in combination. Even if the blending amount of the component (g-1) is beyond the after-mentioned amount, there is no further wetting effect. Therefore, it is not economical to use excess amount. Since this component is volatile, the composition and the cured material after curing become gradually hard if they are left in an open system. Therefore, it is preferable that the blending amount of the component (g-1) is within the minimum necessary amount.

(g-2): dimethylpolysiloxane terminated with a trialkoxysilyl group at the one end of the molecular chain, which is expressed by the following general formula (2). 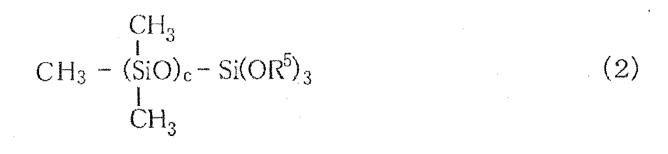 R⁵ in the above formula is, independently, an alkyl group having 1-6 carbon atoms, which is the same kind of group as an alkyl group represented by R⁴ in the above general formula (1). c is an integer of 5-100.

Preferred specific examples of the above component (g-2) are as follows. 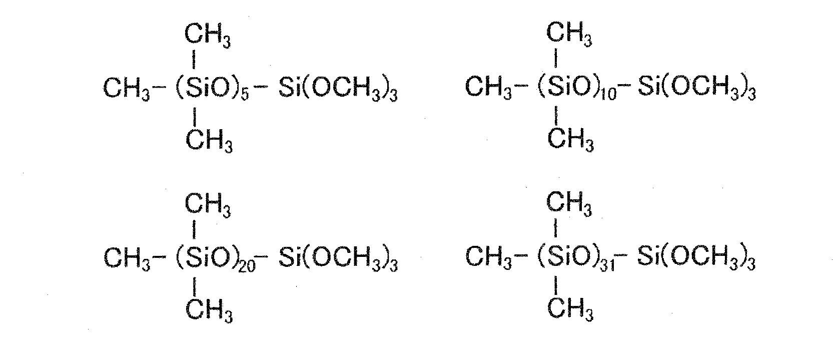 The component (g-2) may be used alone or two or more kinds of them may be used in combination. If the blending amount of this component (g-2) is beyond the amount mentioned below, heat resistance and wet resistance of the cured material obtained tend to decrease.

As the surface treatment agent of the component (g), at least one kind selected from groups consisting of the above components (g-1) and (g--2) can be used in the present invention. In this case, it is preferable that the whole blending amount of the component (g) is 0.01-50 mass parts, in particular 0.1-30 mass parts relative to 100 mass parts of the component (a).

### (h) organopolysiloxane:

Organopolysiloxane, represented by the following general formula (3), having kinematic viscosity of 10-100,000mm²/s at 23°C, can be added to the composition of the outer layer used in the present invention as the additional component (h). This component is suitably used for the purpose of modifying the viscosity of thermal conductive compositions.
General formula (3);

R⁶-(SiR⁶₂O)_{d}SiR⁶₂-R⁶ (3)

R⁶ in the above formula is, independently, an unsubstituted or substituted monovalent hydrocarbon group that has 1-18 carbon atoms and does not contain an aliphatic unsaturated bond, d is an integer of 5-2, 000. It is preferable that d is an integer of 5-2,000, in particular 10-1,000, from a viewpoint of required viscosity. The component (h) used in the present invention is not limited to this. This component (h) may be used alone or two kinds or more of them may be used in combination.

Examples of the above R⁶ are alkyl groups such as methyl group, ethyl group, propyl group, hexyl group, octyl group, decyl group, dodecyl group, tetradecyl group, hexadecyl group and octadecyl group; cyclohexyl groups such as cyclopentyl group and cyclohexyl group; aryl groups such as phenyl group and tolyl group; aralkyl groups such as 2-phenylethyl group and 2-methyl-2-phenylethyl group; halogenated hydrocarbon groups such as 3,3,3-trifluoropropyl group, 2-(perfluorabutyl) ethyl group, 2- (perfluorooctyl) ethyl group and p-chlorophenyl group. In particular, methyl group, phenyl group and alkyl group having 6-18 carbon atoms are preferable in the present invention.

It is preferable that the kinematic viscosity of the organopolysiloxane of the above component (h) at 25°C is 10-100,000mm²/s, in particular 100-10,000mm²/s. If the above kinematic viscosity is under 10mm²/s, the cured material obtained from the composition of the present invention tends to produce oil bleed. If the above kinematic viscosity is beyond 100,000mm²/s, fluidity of the thermal conductive composition of the present invention tends to be poor.

Specific examples of the component (h) available for the present invention are as follows.

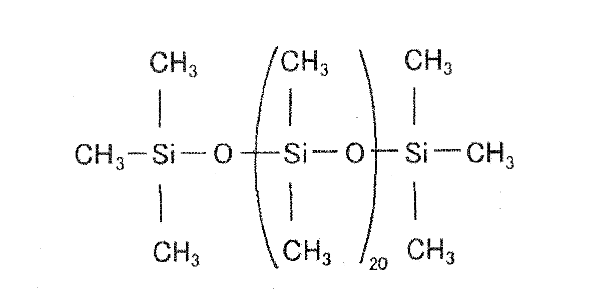

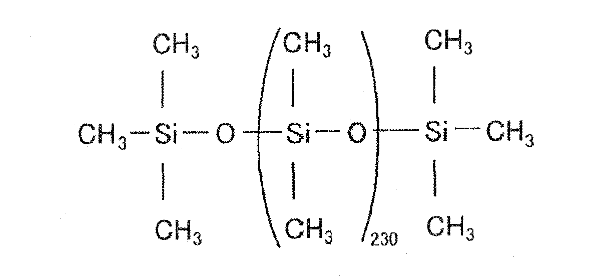

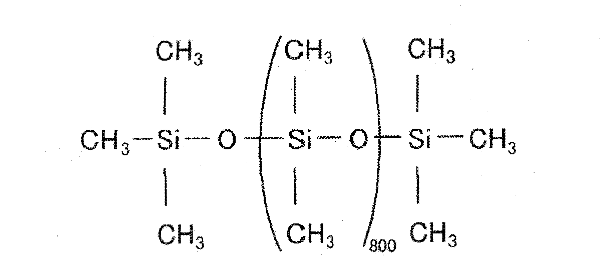

When organopolysiloxane of the above component (h) is used for the composition of the present invention, an addition amount is not limited in particular as long as the desired effect is obtained. Generally, it is preferably 0.1-100 mass parts, more preferably 1-50 mass parts relative to 100 mass parts of the component (a). When the amount of the component (h) added is within this range, fluidity of the thermal conductive composition before curing is excellent. Therefore, not only working properties keeps well, but also it is easy to add the thermal conductive filler of the component (b) to the composition of the present invention.

### [Other optional components]

In the present invention, other optional components may be added. Examples of the other optional components are fluorine-modified silicone surfactant; a coloring agent such as carbonblack, titanium dioxide and ion oxide red; a flame retardance imparting agent such as platinum compound, metal oxide such as an iron oxide, titanium oxide and cerium oxide, or metal hydroxide. In addition, fine powder silica such as precipitated silica or fired silica and a thixotropy improver can be added in order to prevent a precipitation of thermal conductive filler and to reinforce the thermal conductive silicone rubber composite sheet of the present invention.

### [Method for manufacturing thermal conductive composite]

Thermal conductive silicone rubber composite sheet of the present invention can be manufactured as follows. The silicone composition 1 containing a given amount of each component (a) - (f) is coated in the state of thin film on one surface of the electric insulating heat resistant film layer of the intermediate layer (A) and cured to form the first layer of cured material, then the silicone composition 2 containing the above components (a)-(f) is coated in the state of thin film on the other surface of the above intermediate layer and cured to form the second layer of cured material. In this case the above silicone compositions 1 and 2 may be identical or different.

In the above method, when the composition 1 or 2 is prepared, the blending order of each component is not limited in particular, but the method to take the following processes (1)-(3) is preferable.
(1) The given amounts of components (a), (b) and (d) are mixed and kneaded to prepare the base composition.
(2) Separately, a curing agent composed of a mixture of the components (c) and (e) is prepared.
(3) Then, the above base composition is mixed uniformly with a curing agent and a silicone resin of the component (f) to prepare a composition corresponding to the outer layer in the present invention.

An example of the method for coating the above composition to the electric insulating heat resistant film consisting of the intermediate layer (A) and successive forming includes the one wherein liquid materials are coated in the state of thin film on the base material by using a barcoater, knifecoater, commacoater and spincoater etc. However, the present invention is not limited to these methods.

As for the heating temperature condition after coating, in the case of using a solvent, the temperature which can vaporize the solvent and allow the reaction between the components (a) and (c) is enough. Specifically, 50--150°C is preferred and 60-150°C is more preferable considering productivity and effects to the base material film. Curing time is usually 0.5-30 minutes, and 1-20 minutes are preferred. Heating temperature for the vaporization of the solvent and for curing may be the same each other or may be different according to stepping-up or ramping-up.

In the thermal conductive silicone rubber composite sheet of the present invention after its outer layers were cured, the handling properties such as transport and a certain-length-cut become easier by attaching said outer layers to release treated films each of which functions as a protective separator film. In this case, the adhesive power between the separator film and the thermal conductive silicone rubber composite sheet can be controlled by changing the treated amount, type of the release agent or changing the quality of base material of separator film.

As the above separator film, the ones wherein surface release treatment used for silicone adhesive agents is carried out for base materials such as paper and PET film are suitable. Examples of surface release agents used for the surface release treatment are modified silicones having a fluorine-substituted group, such as perfluoro-alkyl group and perfluoro-polyether group, in a main chain.

The above perfluoropolyether group can be represented by the following formulae (5) - (7) . Specific examples of modified silicones having such fluorine-substituted groups are products corresponding to X-70-201 and X-70-258 (commercial names manufactured by Shin-Etsu Chemical Co., Ltd.)

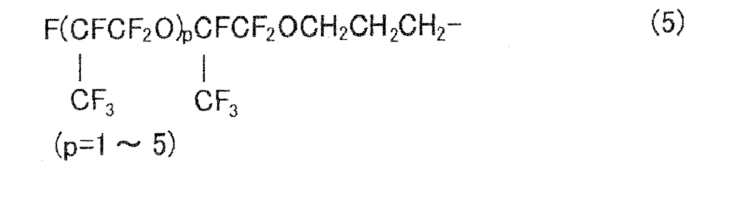

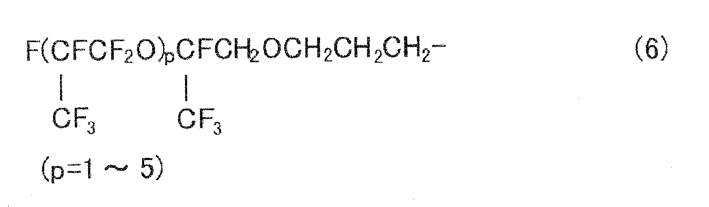

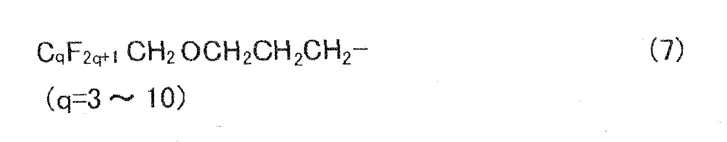

Thermal conductive silicone rubber composite sheet obtained in this way can be put in a desired place easily regardless of thin sheet and can show excellent thermal conductive quality by releasing one of the separator films, attaching to the heat generating electronic parts or heat radiation material parts and then releasing the remaining separator film. In addition, it is possible that adhesive properties of both surfaces differ by changing the compositions of the silicone compositions in both surfaces. Therefore, it is possible to release only weak adhesive side when reworking or releasing is done while the attachment of strong adhesive side is maintained. In this case, stress added to an adherend on the weak adhesive side is reduced, which makes it possible to prevent breakage of the adherend.

In the thermal conductive silicone rubber composite sheet of the present invention, it is preferable that the first and second outer layers are 10-500µm thick, in particular 20-250µm thick. It is preferable that the whole composite sheet is 50-1,000µm thick, more preferably 70-500µm thick. If it is less than 50µm thick, adhesive properties as well as handling properties become poor. On the contrary, if it is more than 1,000µm thick, the desired thermal conductivity cannot be achieved.

Hereafter, this invention will be further concretely described referring to the examples and comparative examples, but this invention should not be limited by these descriptions.

The components (a)-(f) used in the following examples and comparative examples are shown below.

### <Component (a)>

(A-1): dimethylpolysiloxans having kinematic viscosity of 600mm²/s at 25°C, wherein both ends of the molecular chain are terminated with a dimethylvinylsiloxy group.
(A-2): dimethylpolysiloxane having kinematic viscosity of 30,000mm²/s at 25°C, wherein both ends of the molecular chain are terminated with a dimethylvinylsiloxy group.

### <Component (b)>

(B-1): Almina powder having average particle diameter 10.7µm.
(B-2): Almina powder having average particle diameter 1.1µm.
(B-3): Zinc oxide powder having average particle diameter 0.6µm.
(B-4): Aluminum powder having average particle diameter 10.3µm.
(B-5) : Aluminum powder having average particle diameter 1.5µm.

### <Component (c)>

(C-1): Organohydrogenpolysiloxane represented by the following structural formula.

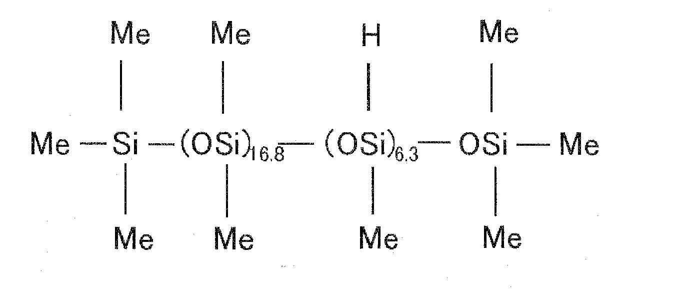

### <Component (D)>

(D-1): A dimethylpolysiloxane solution of platinum-divinyltetramethyldisiloxane complex (Both ends of the molecular chain of dimethylpolysiloxane are terminated with a dimethylvinylsylyl group, a kinematic viscosity is 600mm²/s at 25°C and platinum atom content is 1 percent by mass.).

### <Component (E)>

(e-1): Toluene solution of 50 percent by mass of 1-ethynyl-1-cyclohexanol.

### <Component (f)>

(F-1): Toluene solution of silicone resin, substantially consisting of only Me₃SiO_{0.5} unit (M unit) and SiO₂ unit (Q unit), wherein a mole ratio of M/Q is 1.15, nonvolatile parts are 60% by mass weight and a viscosity of the solution is 30mm²/s.
(F-2): Toluene solution of silicone resin substantially consisting of only Me₃SiO_{0.5} unit (M unit) and SiO₂ unit (Q unit), wherein a mole ratio of M/Q is 0.85, nonvolatile parts are 70% by mass weight and a viscosity of the solution is 30mm²/s.

### <Component (g)>

(G-1) : Organosilane represented by C₁₂H₂₅Si(OC₂H₅)₃.
(G--2): dimethylpolysiloxane terminated with a trimethoxysilyl group at one end of the molecular chain represented by the following structural formula.

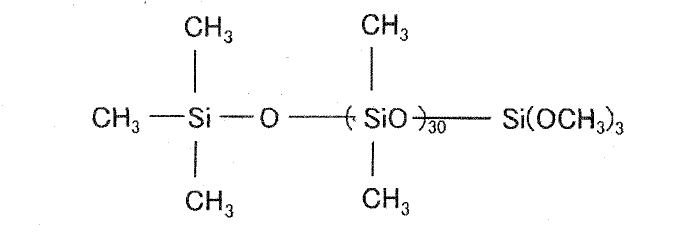

### <Component (h)>

(H-1): dimethylpolysiloxane having kinematic viscosity of 600mm²/s at 25°C represented by the following structural formula.

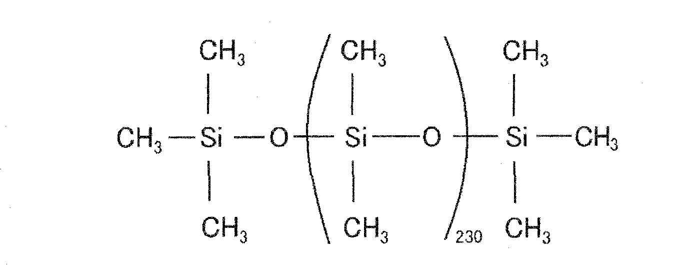

### <Intermediate layer>

(J-1): Aromatic polyimide film having thermal conductivity of 0.08W/m·K and 25µm thick (commercial name: Kapton 100H manufactured by DU PONT-TORAI CO., LTD.).
(J-2): Aromatic polyimide film having thermal conductivity of 0.42W/m·K and 25µm thick (commercial name: Kapton 100MT manufactured by DU PONT-TORAI CO., LTD.).

### <Protective separator film>

(K-1): PET film of 100µm thick coated with 1.0g/m² X-70-201 (commercial name of fluorinated releasing agent: manufactured by Shin-Etsu Chemical Co., Ltd.).
(K-2): Untreated PET film 100µm thick

### [Preparation examples 1-4, Comparative preparation examples 1-3]

### <Preparation of thermal conductive composition>

According to the blending amount (mass parts) described in Table 1, components described in Table 1 are blended to prepare compositions S1-S7 as follows. Compositions S5, S6 and S7 do not satisfy the condition of the present invention.

The components (a) and (b) are introduced into the planetary mixer with 700ml inside volume (commercial name: T . K . HIVIS MIX manufactured by Tokushu Kika Kogyo Co., Ltd.). In the case that the components (g) and (h) are used additionally, the components (g) and (h) are introduced, then mixed for 60 minutes. Next, the components (d) and (e) are added and mixed uniformly. Finally the components (c) and (f) are added, and mixed uniformly to prepare the composition.

**[Table 1]**

| | | | | Preparation example | | | | Comparative preparation | | |
|---|---|---|---|---|---|---|---|---|---|---|
| | | | | 1 | 2 | 3 | 4 | 1 | 2 | 3 |
| | | | | S1 | S2 | S3 | S4 | S5 | S6 | S7 |
| composition | weight parts | (a) | A-1 | 100 | - | 100 | - | 100 | 100 | 100 |
| | | | A-2 | - | 100 | - | 100 | - | - | - |
| | | (b) | B-1 | 1194 | 685 | 796 | - | 955 | 3184 | 1194 |
| | | | B-2 | 298 | 171 | 199 | - | 239 | 995 | 298 |
| | | | B-3 | - | - | 113 | - | - | - | - |
| | | | B-4 | - | - | - | 355 | - | - | - |
| | | | B-5 | - | - | - | 234 | - | - | - |
| | | (c) | C-1 | 8.6 | 2.9 | 7 | 2.9 | 8.6 | 8.6 | 1.2 |
| | | (f) «note 1» | F-1 | 300 (180) | - | 320 (192) | - | 50 (30) | 300 (180) | 300 (180) |
| | | | F-2 | - | 285 (200) | - | 228 (160) | - | - | - |
| | | (g) | G-1 | - | - | 5 | - | - | - | - |
| | | | G-2 | 15 | 15 | 5 | 15 | 15 | 15 | 15 |
| | | (h) | H-1 | - | - | 5 | - | - | - | - |
| | concentration (ppm) «note 2» | (d) | D-1 | 7000 (70) | 7000 (70) | 7000 (70) | 7000 (70) | 7000 (70) | 7000 (70) | 7000 (70) |
| | | (e) | E-1 | 7000 (3500) | 7000 (3500) | 7000 (3500) | 7000 (3500) | 7000 (3500) | 7000 (3500) | 7000 (3500) |
| SiH/Vi «note 3» | | | | 2.2 | 3.1 | 1.8 | 3.1 | 2.2 | 2.2 | 0.3 |

| | | | | | | | | | | |
|---|---|---|---|---|---|---|---|---|---|---|
| «note 1»: Values in parentheses in the Table are mass parts of resin in the component (f) relative to the component (a) 100 mass parts. «note 2»: The concentration of the components (d) and (e) in the Table are the ones of the components (D-1) and (E-1) relative to the mass of the component (a). Values in parentheses are the concentration as a platinum atom of the component (D-1) relative to the mass of the component (a) and the concentration of 1-ethynyl-1-cyclohexanol contained in the component (E-1) relative to the component (a). «note 3»: SiH/Vi means a number of hydrogen atoms corresponding to the SiH group in the component (B) (a hydrogen atom bonded to a silicon atom) relative to one vinyl group in the component (A) . | | | | | | | | | | |

### [Examples 1-4, Comparative Examples 1-3]

### <Manufacture of Composite Sheet>

After selecting one kind (X1) from the compositions obtained in the above Table 1 and coating it to one surface of an intermediate layer, curing was carried out according to the conditions described in Tables 2 and 3 to obtain the composite material (Y1) which is consisting of cured thermal conductive material and the intermediate layer. After attaching the protective separator film to the cured thermal conductive layer, one more kind (X2) were selected from the compositions described in Table 1 in order to apply it to another surface of the intermediate layer. Similarly, curing was carried out to obtain the composite material (Y2) according to the conditions described in Tables 2 and 3, then the protective separator film was attached to obtain the composite sheet described in Tables 2 and 3. Adhesive properties, bleeding properties, release properties from the base material, handling properties after release and thermal resistance of the obtained composite materials were evaluated by the following methods. Results are shown in Tables 2 and 3.

### <Release properties>

The thermal conductive composite after curing was evaluated by the weight feeling when released from the protective separator film with hands (evaluation by feeling). When feeling of release is light and the composite did not change in form at all, the evaluation was "good". When feeling of release was heavy or the composite was changed in form, the evaluation was "poor".

### <Handling properties after release>

Handling properties with hands of the thermal conductive cured material after release was evaluated focusing the body form and shape. When the thermal conductive cured material, which was released from the base material film, is attached to an aluminum board, the evaluation was "good" if attaching can be carried out without difficulty. On the contrary, in the case that the thermal conductive cured material was cracked or stuck to hands tightly to change in form so that it could not return to the original form and shape, the evaluation was "poor".

### <Adhesive properties>

As described above, each surface of the thermal conductive composite was attached to an aluminum plate by using a 2Kg-rubber roller and after resting for 10 minutes, another surface that did not be attached to the aluminum plate was attached to the silicone adhesive tape (manufactured by Nippa Co., Ltd.) having strong adhesive strength in order to prevent the composite from changing in form. After releasing one end of it, the end was pulled to release by the tension test machine (Autograph manufactured by SHIMADZU Co.,Ltd.) in the direction of 180° at a release speed of 300mm/min. at room temperature to measure the adhesive strength ( JIS Z 0237). The measurement results are shown in Tables 2 and 3.

### <Bleeding properties>

A sample of 0.1mm thick was cut into 20mm-square for each base material. Each sample piece was put on the woodfree paper so that the thermal conductive cured layer faces to the woodfree paper firmly, and further a 100g-weight was put on the sample piece. After one day, the amount of oil transferred to the woodfree paper was visually estimated to evaluate.

### <Heat resistance>

The obtained thermal conductive composite was put on the whole surface of a disk plate consisting of standard aluminum (purity: 99.9%, diameter: about 12.7mm, thickness: about 1.0mm) then an other standard aluminum plate was put on it. About 175.5kPa (1.80kgf/cm²) pressure was applied by clipping the obtained structure to obtain a three-layered structure.

After measuring the thickness of the obtained sample piece, the thickness of the thermal conductive composite was calculated by subtracting the thickness of the standard aluminum plate. A Micrometer (manufactured by Mitutoyo Corporation, type:M82.0-25VA) was used for measuring the thickness of the sample piece.
The obtained results are shown in Tables 2 and 3. Heat resistance of the thermal conductive composite (cm 2 .K/W) was measured with a heat resistance measuring analyzer (manufactured by NETZSCH-Feinmahltechnik GmbH Xenon Flash Apparatus: LFA447 NanoFlash) by using the above sample piece. The obtained heat resistance is shown in Tables 2 and 3.

**[Table 2]**

| Example | | 1 | 2 | 3 | 4 |
|---|---|---|---|---|---|
| composition used for X1 | | S1 | S3 | S2 | S4 |
| Composition used for X2 | | S2 | S2 | S2 | S4 |
| Intermediate layer | | J-1 | J-2 | J-2 | J-2 |
| Separator film | | K-1 | K-1 | K-1 | K-1 |
| Curing conditions | | Heated with Oven for 20 minutes at 90°C | Heated with Oven for 20 minutes at 90°C | Heated with Oven for 20 minutes at 90°C | Heated with Oven for 20 minutes at 90°C |
| Thickness of Y1 (µm) | | 116 | 103 | 114 | 116 |
| Thickness of Y2 (µm) | | 201 | 152 | 200 | 200 |
| Release properties | | good | good | good | good |
| Treating properties after release | | good | good | good | good |
| Adhesive strength (N/cm) | X1 side | 0.7 | 4.6 | 4.2 | 4.8 |
| | X2 side | 4.3 | 2.8 | 4.4 | 5.1 |
| Bleed | | almost nothing | almost nothing | almost nothing | almost nothing |
| Heat resistance (cm²-K/W) | | 3.4 | 2.1 | 2.7 | 1.4 |

**[Table 3]**

| Comparative example | | 1 | 2 | 3 |
|---|---|---|---|---|
| X1 | | S2 | S6 | S6 |
| X2 | | S5 | S2 | S2 |
| Intemediate layer | | J-1 | J-2 | J-2 |
| Separator film | | K-1 | K-1 | K-2 |
| Curing conditions | | Heated with Oven for 20 minutes at 90°C | Heated with Oven for 1 minute at 80°C | Heated with Oven for 20 minutes at 90°C |
| Thickness of Y1 (µm) | | 113 | Curing forming were impossible | 106 |
| Thickness of Y2 (µm) | | 252 | Not measured since Y1 could not be formed | 211 |
| Release properties | | good | | Very heavy, composite was changed in shape |
| Treating properties after release | | Cured material was fragile with crack | | Not measured since composite changed in shape |
| Adhesive strength (N/cm) | Strong adhesive side | Cured material was cracked, | | |
| | Weak adhesive side | unmeasurable | | |
| Bleeding properties | | A small amount | | |
| Heat resistance (cm²-K/W) | | 4.8 | | |

As is clear from the results of Tables 2 and 3, it was identified that the thermal conductive silicone rubber composite sheet of the present invention has no oil bleed regardless of good thermal conductivity, and it is excellent in handling properties since it has suitable adhesive strength.

### [Industrial applicability]

The thermal conductive silicone rubber composite sheet of the present invention is excellent in thermal conductivity and has sufficient strength and flexibility. Therefore, not only it is suitable as electric insulating thermal conductive material parts attached between heat generating electronic-electric parts and heat radiation parts, but also it is excellent in endurance since the silicone rubber layer itself has adhesive properties and is tightly attached to the synthetic resin film layer. Accordingly it is available industrially.

## Claims

1. A thermal conductive silicone rubber composite sheet, comprising of an intermediate layer (A), which is an electric insulating heat resistant film, and cured material layers as an outer layers (B) prepared on both surfaces of said intermediate layer (A), **characterized in that** said cured material layers (B) are prepared by curing a silicone composition in a thin film state which are formed by coating said silicone composition comprising the following components (a)-(f) on both surfaces of said intermediate layer (A) ;
(a) organopolyciloxane having two or more alkenyl groups bonding to a silicon atom within a molecule: 100 mass parts
(b) thermal conductive filler: 100-4,000 mass parts
(c) organohydrogenpolysiloxane having two or more hydrogen atoms bonding to a silicon atom within a molecule: the amount wherein the mole ratio of [the hydrogen atom bonding to a silicone atom of the present component/an alkenyl group in the component (a)] is 0.5-5.0
(d) platinum group metallic catalyst: effective amount
(e) reaction control agent: effective amount, and
(f) silicone resin: 50-500 mass parts
wherein, the outer layers provided on both surfaces of the intermediate layer (A) may be identical or different.

2. A thermal conductive silicone rubber composite sheet according to Claim 1, wherein the silicone resin of the above component (f) contains R¹₃SiO_{1/2} unit (R¹ indicates an unsubstituted or substituted monovalent hydrocarbon group that does not contain an aliphatic unsaturated bond) and SiO_{4/2} unit, wherein mole ratio of R¹₃SiO_{1/2} unit/SiO_{4/2} unit is 0.5-1.5.

3. A thermal conductive silicone rubber composite sheet according to Claim 1 or 2, wherein the silicone composition further comprises, as a component (g), 0.01-50 mass parts of at least one kind of compounds selected from a group consisting of (g-1) alkoxysilane compounds represented by the following general formula (1) and (g-2) dimethylpolysiloxane represented by the general formula (2) wherein one end of the molecular chain is terminated with a trialkoxysilyl group:
(g-1) alkoxysilane compounds
General formula (1):
R²ₐR³_{b}Si(OR⁴)_{4-a-b} (1)
wherein R² in the above formula is independently an alkyl group having 6-15 carbon atoms, R³ is independently an unsubstituted or substituted monovalent hydrocarbon group having 1-8 carbon atoms, R⁴ is independently an alkyl group having 1-6 carbon atoms, a is an integer of 1-3, b is an integer of 0-2 and a+b is an integer of 1-3.
(g-2) dimethylpolysiloxane
General formula (2): 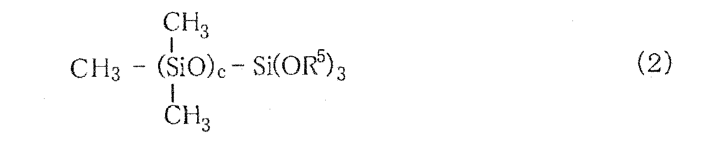 wherein R⁵ in the above formula is independently an alkyl group having 1-6 carbon atoms, c is an integer of 5-100.

4. A thermal conductive silicone rubber composite sheet according to any of Claims 1-3, wherein the silicone composition further comprises an organopolysiloxane represented by the following general formula (3) whose kinematic viscosity is 10-100,000mm²/s at 23°C is contained as a component (h),
General formula (3):
R⁶-(SiR⁶₂O)_{d}SiR⁶₂-R⁶ (3)
wherein R⁶ in the above formula is independently a monovalent hydrocarbon group having 1-18 carbon atoms that does not contain an aliphatic unsaturated bond, d is an integer of 5-2,000.

5. A thermal conductive silicone rubber composite sheet according to any of Claims 1-4 wherein the whole thickness of said composite is 50-1,000 µm.

6. A thermal conductive silicone rubber composite sheet according to any of Claims 1-5, wherein the intermediate layer (A) is a thermal conductive film having thermal conductivity of 0.3W/m- K or more, which comprises of a synthetic resin and a thermal conductive powder dispersed in said synthetic resin.

7. A thermal conductive silicone rubber composite sheet according to Claim 6, wherein said synthetic resin is aromatic polyimide, polyamide, polyamideimide, polyester, fluorinated polymer or a combination of these two or more kinds.

8. A thermal conductive silicone rubber composite sheet according to Claim 6 or 7, wherein the thermal conductive powder dispersed in the synthetic resin is at least one kind of powder selected from a group consisting of zinc oxide powder, aluminum oxide powder, magnesium oxide powder, aluminum hydroxide powder, boron nitride powder, aluminum nitride powder, silicon carbide powder and diamond powder.

9. A method for manufacturing a thermal conductive silicone rubber composite sheet according to any one of Claims 1-8 **characterized in that** the silicone composition 1. comprising the following components (a)-(f) is coated on one surface of the electric insulating heat resistant film of the intermediate layer (A) in a thin film state and cured to form the first layer of cured material, then the silicone composition 2 containing the above components (a)-(f) is coated on the other surface of the above intermediate layer in a thin film state and cured to form the second layer of cured material;
(a) organopolysiloxane having two or more alkenyl groups bonding to a silicon atom within a molecule: 100 mass parts
(b) thermal conductive filler: 100-4,000 mass parts
(c) organohydrogenpolysiloxane having two or more hydrogen atoms bonding to a silicon atom within a molecule: the amount wherein the mole ratio [the hydrogen atom bonding to a silicone atom of the present component/an alkenyl group in the component (a)] is 0.5-5.0
(d) platinum group metallic catalyst: effective amount
(e) reaction control agent: effective amount, and
(f) silicone resin: 50-500 mass parts.
